# EUROPÄISCHE PATENTSCHRIFT

(11) **EP 0 437 597 B1**
(45) Veröffentlichungstag und Bekanntmachung des Hinweises auf die Patenterteilung: **13.07.1994**
(21) Anmeldenummer: 90913142.7
(22) Anmeldetag: 08.08.1990
(51) Int. Cl.: G01D 5/14, G01P 3/48

(54) **VORRICHTUNG ZUM MESSEN VON LÄNGEN, WINKELN UND DERGLEICHEN**
DEVICE FOR MEASURING LENGTHS, ANGLES AND THE LIKE
DISPOSITIF POUR LA MESURE DE LONGUEURS, D'ANGLES ET SIMILAIRE

(30) Priorität: 09.08.1989 DE 3926328
(43) Veröffentlichungstag der Anmeldung: 24.07.1991
(73) Patentinhaber: MAGNETIC RESEARCH AND TRADING CORP., FL-9490 Vaduz (LI)
(72) Erfinder: THÖNY, Christian-Erik, FL-9495 Triesen (LI); THÖNY, Peter-Georg, CH-8000 Zürich (CH)
(74) Vertreter: Schwan, Gerhard, Dipl.-Ing.
(86) Internationale Anmeldenummer: EP9001304
(87) Internationale Veröffentlichungsnummer: WO9102220

(56) Entgegenhaltungen:
- EP-A- 0 045 649
- US-A- 3 739 211
- US-A- 4 226 024
- PATENT ABSTRACTS OF JAPAN, Bd. 7, Nr. 90 (P-191)(1235),14. April 1983;& JP-A-5815113

## Beschreibung

Die Erfindung betrifft eine Vorrichtung zum Messen von Längen, Winkeln und dergleichen, mit zwei gegeneinander bewegbaren Bauteilen, die zusammen einen magnetischen Kreis bilden, der über einen Luftspalt zwischen den gegeneinander bewegbaren Bauteilen geführt ist, wobei das eine der Bauteile mit einer Folge von einander in Richtung der gegenseitigen Bewegung in vorgegebener Teilung abwechselnden Stegen von relativ hoher und relativ niedriger magnetischer Leitfähigkeit versehen ist, während das andere Bauteil mindest ein Meßelement mit einem aus einem magnetfeldabhängigen Halbleiter-Bauelement bestehenden Magnetfeld-Sensor aufweist, der auf durch gegenseitige Bewegung der beiden Bauteile bedingte Änderungen eines von einer Magnetflußquelle verursachten, den magnetischen Kreis durchsetzenden Magnetflusses anspricht.

Bei einer bekannten Meßvorrichtung dieser Art (US-A-4 226 024) ist das eine Bauteil ein Stab, während das andere Bauteil als entlang dem Stab verschiebbarer Schlitten ausgebildet ist. Das Meßelement weist einen Permanentmagneten auf, der an seiner der Stegfolge zugekehrten Seite im Luftspalt zwischen dem Permanentmagneten und der Stegfolge als Magnetfeld-Sensor eine Feldplatte trägt. Der Sensor befindet sich also in dem über den Luftspalt geführten magnetischen Kreis, wobei die Abmessung der Feldplatte in der Bewegungsrichtung der Breite der magnetisch schlecht leitenden Stege entspricht. Bei der bekannten Vorrichtung sind die Abmessungen der Feldplatte und die Breite der Stege prinzipbedingt voneinander abhängig. Die Abmessung der Feldplatte in der Verschieberichtung darf insbesondere nicht größer als die maximale Stegbreite sein. Der erzielbaren Auflösung sind daher durch die Abmessungen der Feldplatte enge Grenzen gesetzt. Andererseits lassen sich die Feldplattenabmessungen nicht im Interesse erhöhter Auflösung beliebig verkleinern. Hinzu kommt, daß das Meßsignal der im Magnetkreis liegenden Feldplatte einen hohen Gleichanteil aufweist, der nur geringfügig moduliert ist.

Man hat bei einer ähnlichen Vorrichtung (DE-A-37 20 524) versucht, den störenden Gleichspannungsanteil des Meßsignals dadurch zu senken, daß der Sensor Zwei mit ihren Pol-Stirnflächen in einer Ebene nebeneinander angeordnete Magneten entgegengesetzt gerichteter Polarität aufweist, daß als Sensor eine Hallplatte im Abstand von und im wesentlichen symmetrisch zu einem Paar der Pol-Stirnflächen der Magnete angeordnet ist und daß eine magnetische Längsmarkierung oberhalb der Hallplatte in einer zu der Ebene der Pol-Stirnflächen im wesentlichen parallelen Ebene bewegt wird. Auch bei dieser Vorichtung bestimmt aber die Größe der verwendeten Hallplatte den Mindestwert der Stegbreite der magnetischen Längsmarkierung. Die erreichbare Auflösung und Genauigkeit sind daher nach wie vor sehr beschränkt.

Höhere Auflösungen lassen sich zwar bei einer einen Stab und einen Läufer aufweisenden Meßkluppe in bekannter Weise (DE-A-37 07 190) dadurch erzielen, daß ein Längenmeßelement mit einem Tonband-Magnetkopf verwendet wird, der einen Luftspalt aufweist, aus dem ein Streufeld austritt. Dieser Magnetkopf ist so positioniert, daß beim Verschieben des Läufers auf dem Stab magnetische Längsmarkierungen durch das Streufeld laufen. Eine solche Anordnung hat jedoch einen relativ hohen Stromverbrauch, was insbesondere bei transportablen, batteriebetriebenen Geräten von Nachteil ist.

Des weiteren ist ein Drehzahlmeßgerät für Nähmaschinen bekannt (EP-A-0 045 649), bei dem eine ringförmige Wicklung in einem geschlossenen magnetischen Kreis liegt, der von einem ringförmigen Dauermagneten, einem gezahnten Stator, einem gezahnten Rotor, einem Joch, einem nichtgezahnten Rotor und einem nichtgezahnten Stator gebildet wird. Die bekannte Vorrichtung arbeitet nach dem Prinzip der magnetischen Induktion. Gemäß dem Induktionsgesetz ist die induzierte elektromotorische Kraft proportional der Änderungsgeschwindigkeit des Magnetflusses und damit abhängig von der gegenseitigen Geschwindigkeit von Rotor und Stator der bekannten Vorrichtung.

Der Erfindung liegt die Aufgabe zugrunde, eine Meßvorrichtung der eingangs genannten Art dahingehend weiterzubilden, daß eine hohe Auflösung und Meßgenauigkeit gewährleistet werden, ohne daß dies mit hohem Energieverbrauch erkauft werden muß.

Bei einer Vorrichtung mit den Merkmalen des Oberbegriffs des Anspruchs 1 wird diese Aufgabe erfindungsgemäß dadurch gelöst, daß der Sensor außerhalb des über den Luftspalt geführten magnetischen Kreises in dessen Streufeldbereich angeordnet ist.

Weil der Sensor außerhalb des über den Luftspalt geführten Magnetkreises angebracht ist, kann ein beliebig genauer und beliebig großer Sensor ausgewählt werden. Insbesondere kann die Teilung der Stege um Faktoren kleiner als die Sensorgröße gewählt werden, was der Auflösung zugute kommt. Das erfindungsgemäße Konzept erlaubt eine sehr kompakte Bauweise: dies ist beispielsweise bei Taschenmeßschiebern von ausschlaggebender Bedeutung.

Bevorzugte weitere Ausgestaltungen der Erfindung ergeben sich aus den Unteransprüchen.

Insbesondere sind vorzugsweise in dem Meßelement mehrere in Richtung der gegenseitigen Bewegung der beiden Bauteile nebeneinanderliegende, entsprechend der Stegteilung geteilte magnetische Teilflüsse zu einem Gesamtfluß zusammengefaßt, und der mindestens eine Sensor ist derart angeordnet und ausgebildet, daß er ein Ausgangssignal abgibt, das eine Funktion der Summe der magnetischen Teilflüsse ist. Dadurch wird eine integrierende Wirkung erreicht, die Ungenauigkeiten in der Fertigung ausgleicht. Die Fertigungskosten lassen sich infolgedessen senken. Die Meßgenauigkeit ist vergleichsweise groß.

Das Meßelement kann mit zwei quer zu der Richtung der gegenseitigen Bewegung in Abstand voneinander liegenden Gruppen von Polzähnen entgegengesetzter Polung versehen sein, die mit der Stegfolge zusammenwirken und die an einem von der Stegfolge abliegenden Ende gruppenweise magnetisch leitend untereinander verbunden sind. Entsprechend einer zweckmäßigen Ausführungsform kann jede der beiden Polzahngruppen von je einem kammförmigen Flußführungsteil gebildet sein, das einen sich in der Richtung der gegenseitigigen Bewegung erstreckenden Steg aufweist, welcher die Polzähne des betreffenden Flußführungsteils an ihrem von der Stegfolge abliegenden Ende untereinander verbindet. Entsprechend einer abgewandelten Ausführungsform sind die Magnetflußquelle und die beiden Polzahngruppen von einem vorzugsweise als Sinterkörper ausgebildeten monolithischen Permanentmagneten gebildet. Diese Maßnahme hat den Vorteil, daß die Montage- und Herstellungskosten weiter reduziert werden können, was sich insbesondere bei hohen Stückzahlen auszahlt.

Beide Polzahngruppen können Teilen der Stegfolge gegenüberstehen, die auf der gleichen Seite des einen Bauteils liegen. Es ist aber auch möglich, die Anordnung so zu treffen, daß die Polzahngruppen Teilen der Stegfolge auf entgegengesetzten Seiten des einen Bauteils gegenüberstehen. Im letztgenannten Falle wird das Bauteil von dem Meßelement zweckmäßig an drei Seiten hufeisenförmig umgriffen.

In vorteilhafter weiterer Ausgestaltung der Erfindung weist das Meßelement mindestens einen Streufeldkonzentrator auf, der mit dem mindestens einen Sensor zusammenwirkt. Der Streufeldkonzentrator kann insbesondere von einem außerhalb des magnetischen Kreises liegenden, sich verjüngenden Ansatz des einen Flußführungsteils bzw. des monolithischen Permanentmagneten gebildet sein. Er sorgt für eine Konzentration des magnetischen Streuflusses an der Stelle, an welcher der Sensor den Streufluß mißt. Dadurch steht ein stärkeres Signal für die Auswertung zur Verfügung, und es kann ein größenoptimierter Sensor eingesetzt werden. Diese Ausführung ist bei Taschenmeßschiebern von besonderer Bedeutung.

Zum Schutz gegen fremde Magnetfelder kann vorteilhaft ein magnetisch leitender Käfig vorgesehen sein, der mindestens die magnetisch aktiven Bereiche der Vorrichtung umgibt.

In an sich bekannter Weise (US-PS 4 226 024) können zwei gegeneinander in der Bewegungsrichtung versetzte Sensoren vorgesehen werden, um in einfacher Weise die Bewegungsrichtung festzustellen. Die Ausgangssignale des Sensors oder der Sensoren lassen sich in beliebiger bekannter Weise aufbereiten und auswerten. Beispielsweise können die Minima und Maxima der periodischen Meßsignale für eine inkrementelle Zählung erfaßt und herangezogen werden. Eine solche Ausbildung gestattet eine besonders einfache und schnelle Auswertung. Es ist aber auch möglich, die periodischen Meßsignale einer genauen Signalanalyse zu unterziehen und dabei auch Offsetdrifte, hervorgerufen durch Alterung der Bauteile, Verschmutzung und/oder Temperaturunterschiede, zu kompensieren. Dabei kann das Meßsignal vorteilhaft mit einem Sollsignal verglichen werden. Die auf diese Weise erreichbare genauere Auswertung ist von Bedeutung, wenn es darauf ankommt, z.B. Meßmaschinenachsen hoch aufzulösen.

Die erfindungsgemäße Meßvorrichtung läßt sich für Längenmessungen auslegen, bei welchen das eine Bauteil eine Translationsbewegung gegenüber dem anderen Bauteil ausführt. Dabei kann eine Digitalisierung von unterschiedlichsten Achsen in verschiedensten Produkten und Geräten vorgesehen werden. Wichtige Anwendungsfälle sind unter anderen Schiebelehren zur Handmessung von Längen an Werkstücken, Meßkluppen zur Messung von Baumdurchmessern oder zur Vermessung von Tierhälften, Maschinenachsen an Werkzeug-, Meß- und Produk-tionsmaschinen, lange Achsen von Sägereimaschinen, Rollmeter und dergleichen. Solche Meßeinrichtungen können die verschiedensten Formen und Längen aufweisen. Dabei eignet sich die Meßvorrichtung nach der Erfindung auch für Fälle hoher Umweltbelastung. Insbesondere kann die Vorrichtung nach der Erfindung ohne weiteres so ausgelegt werden, daß sie gegen Feuchtigkeit resistent ist, gleichwohl aber eine hohe Genauigkeit gewährleistet. Auch Winkel- und Rota-tionsmeßsysteme lassen sich in der erfindungsgemäßen Weise aufbauen, so u.a. allgemeine Winkelgeber, die vorher oder nachher an einem Gerät angebracht werden; allgemeine Drehzahlüberwachung zur vorherigen oder nachträglichen Montage an dem betreffenden Gerät; Spindelvorschübe; Motoren, insbesondere Elektromotoren; Meßschrauben zur genauen Längenmessung (Durchmesser, Dicken etc.) und dergleichen.

Bevorzugte Ausführungsbeispiele der Erfindung sind nachstehend anhand der beiliegenden Zeichnungen näher erläutert. Es zeigen:
- Fig. 1: vereinfacht und teilweise abgebrochen den Aufbau eines erfindungsgemäßen Meßelements mit zugehörigem Magnetfluß,
- Fig. 2: das Meßelement gemäß Fig. 1 im Schnitt bei geschlossenem Magnetkreis,
- Fig. 3: eine Darstellung entsprechend Fig. 2 für offenen Magnetkreis,
- Fign. 4 und 5: eine Teildraufsicht und eine Stirnansicht einer Schieblehre,
- Fig. 6: eine schematische Darstellung eines Winkelgebers,
- Fig. 7: eine schematische Darstellung einer abgewandelten Ausführungsform mit monolithischem Meßelement und magnetischem Schutzkäfig,
- Fign. 8 und 9: die Art der bei der Meßvorrichtung auftretenden Meßsignale,
- Fig. 10: ein Blockschaltbild einer möglichen Auswerteelektronik und
- Fig. 11: einen schematischen Längsschnitt einer Ausführungsform des die Stegfolge bildenden Bauteils.

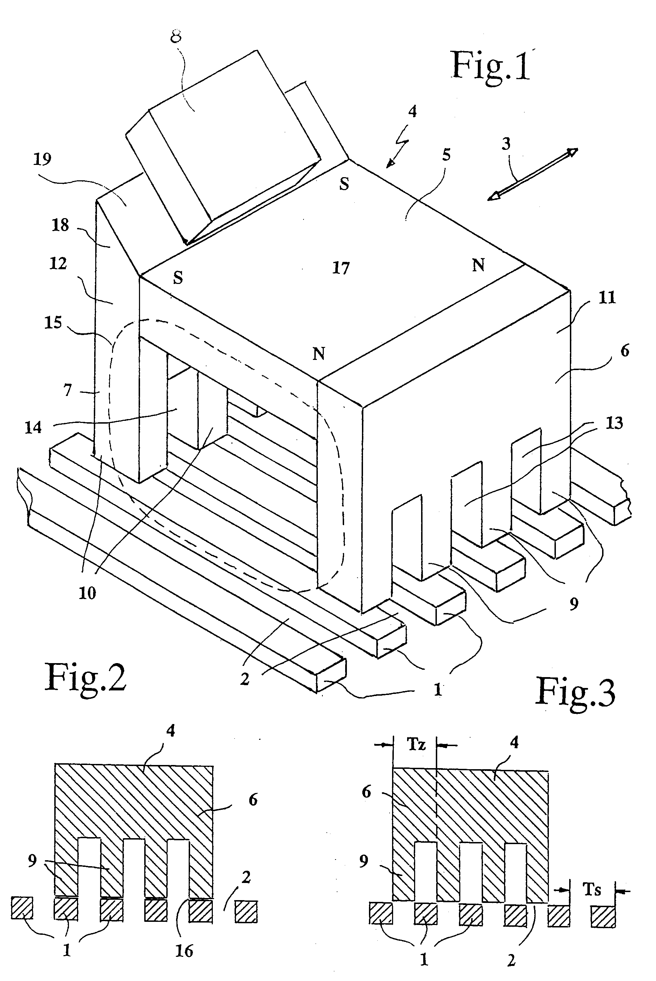

Wesentlicher Bestandteil der vorliegend erläuterten Meßvorrichtung ist ein Meßsystem der in Fig. 1 schematisch veranschauliehten Art. Zu diesem Meßsystem gehört eine Folge von äquidistant angeordneten Stegen 1 von relativ hoher magnetischer Leitfähigkeit, die sich mit einer Folge von Stegen 2 von relativ niedriger magnetischer Leitfähigkeit abwechseln. Die Stege ¹und ² sind Teil eines ersten Bauteils, bei dem es sich im Falle einer Längenmeßvorrichtung beispielsweise um einen feststehenden Stab einer Schieblehre, Meßkluppe oder dergleichen handeln kann. Ein gegenüber dem ersten Bauteil in Richtung des Doppelpfeils 3 bewegbares zweites Bauteil, z.B. in Form eines entlang dem feststehenden Stab verschiebbaren Schlittens, trägt mindestens ein in Fig. 1 insgesamt mit 4 bezeichnetes Meßelement. Das Meßelement 4 umfaßt einen quaderförmigen Permanentmagneten 5, zwei kammförmige Flußführungsteile 6 und 7 sowie einen Sensor 8. Der Permanentmagnet 5 ist parallel zu und in Abstand von den Stegen 1, 2 angeordnet und quer zu der Bewegungsrichtung 3 des Meßelements 4 magnetisiert. Seine beiden Pole sind bei N und S angedeutet. Die beiden Flußführungsteile 6, 7 weisen jeweils eine Gruppe von in der Bewegungsrichtung 3 in gleichmäßigen Abständen aufeinanderfolgenden Polzähnen 9 bzw. 10 auf. Die freien, in Fig. 1 unteren Enden der Polzähne 9 und 10 sind den quer zu der Bewegungsrichtung 3 ausgerichteten Stegen 1, 2 zugekehrt. Zu jedem der beiden Flußführungsteile 6, 7 gehört ferner ein Steg 11 bzw. 12, der sich in der Bewegungsrichtung 3 erstreckt und der die einzelnen Polzähne 9 bzw. 10 an ihrem anderen Ende magnetisch leitend und mechanisch untereinander verbindet. Die Stege 11, 12 der Flußführungsteile 6, 7 liegen an je einer der beiden Polflächen des Permanentmagneten 5 an, so daß die zugehörigen Polzähne 9 bzw. 10 entgegengesetzt gepolt sind.

In den Fign. 2 und 3 sind die Teilung der Stegfolge 1, 2 mit Tₛ und die Teilung der Polzähne 9 und 10 mit T_{z} bezeichnet. Bei der veranschaulichten bevorzugten Ausführungsform stimmen nicht nur die Teilungen Tₛ und T_{z} miteinander überein, sondern es sind auch in der Bewegungsrichtung 3 die Stege 1 und 2, die Polzähne 9 und 10 sowie die zwischen den Polzähnen befindlichen Pollücken 13 und 14 gleich breit.

Aufgrund der mit den Stegen 1, 2 zusammenwirkenden Polzähne 9, 10 der Flußführungsteile 6, 7 verursacht der Permanentmagnet 5 eine der Anzahl der Polzahnpaare entsprechende Anzahl von magnetischen Teilflüssen 15, die in den Stegen 11, 12 der Flußführungsteile 6, 7 zu einem den Magneten 5 durchsetzenden Gesamtfluß 17 zusammengefaßt werden. Wenn entsprechend Fig. 2 das bewegbare Meßelement 4 eine Stellung einnimmt, in welcher jedes Paar der einander gegenüberliegenden Polzähne 9, 10 mit einem der magnetisch gut leitenden Stege 1 des feststehenden Bauteils ausgerichtet ist, verlaufen die Teilflüsse 15 vom Nordpol N des Permanentmagneten 5 über den betreffenden Polzahn 9, einen Luftspalt 16, den dem Polzahnpaar 9,10 gegenüberstehenden Steg 1, den Luftspalt 16 und den zugehörigen Polzahn 10 zum Südpol S des Magneten 5. Dabei nimmt der magnetische Widerstand in dem magnetischen Kreis einen Kleinstwert an. Entsprechend ist der Streufluß minimal. Nach einer der Hälfte der Teilungen Tₛ und T_{z} entsprechenden Bewegung des Meßelements 4 in der Bewegungsrichtung 3 stehen gemäß Fig. 3 die Polzahnpaare 9, 10 jeweils einem, der Stege 2 mit relativ niedriger magnetischer Leitfähigkeit gegenüber. In dieser Relativstellung hat der magnetische Widerstand im magnetischen Kreis einen Höchstwert erreicht. Der Streufluß ist maximal.

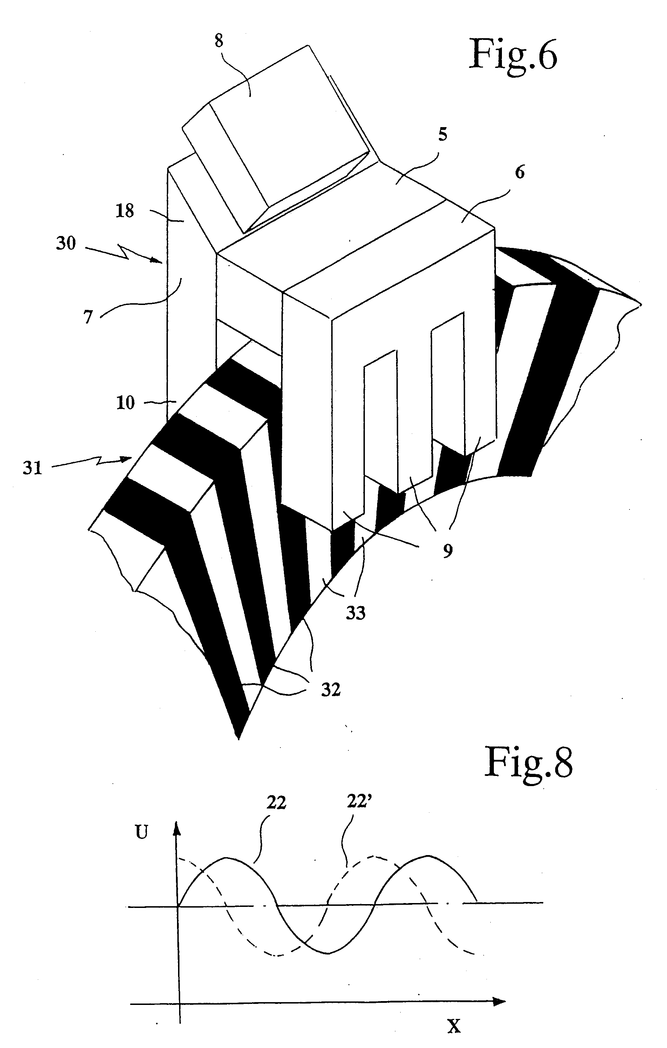

Das Flußführungsteil 7 weist einen nach oben über die Oberseite des Permanentmagneten 5 vorspringenden Ansatz 18 auf, der sich nach oben und außen keilförmig verjüngt. Auf die dadurch gebildete schräge Oberseite 19 des Flußführungsteils 7 ist der Sensor 8 aufgesetzt. Bei dem Magnetfeld-Sensor 8 kann es sich insbesondere um eine Feldplatte, eine Hallsonde, einen Hallgenerator, eine Ferritplatte oder dergleichen handeln. Bei dieser Anordnung liegt, wie aus der Fig. 1 deutlich zu erkennen ist, der Sensor 8 außerhalb der in ihrer Breite durch die Breite der Siege 2, 3 und der Polzähne 9, 10 begrenzten einzelnen magnetischen Flüsse 15. Der Sensor wird vielmehr durch den insgesamt ausgebildeten Streufluß beaufschlagt, und er gibt infolgedessen ein in Fig. 8 mit 22 bezeichnetes Ausgangssignal ab, das eine Funktion der Summe der die Polzähne 9, 10 durchsetzenden magnetischen Teilflüsse ist. Dementsprechend ist die Abmessung des Sensors 8 in der Bewegungsrichtung 3 nicht auf die Breite der Stege 1, 2 und der Polzähne 9,10 beschränkt. Vielmehr kann der Sensor 8 in der Bewegungsrichtung 3 eine praktisch beliebige Breite haben, die vorzugsweise größer als die Teilungen Tₛ und T_{z} ist und die Länge der Stege 11, 12 der kammförmigen Flußführungsteile 6, 7 erreichen kann. Durch die Verjüngung des Ansatzes 18 wird das magnetische Streufeld in diesem Ansatz zusammengepreßt. Der Ansatz 18 wirkt infolgedessen als Streufeldkonzentrator für das auf den Sensor 8 einwirkende magnetische Streufeld.

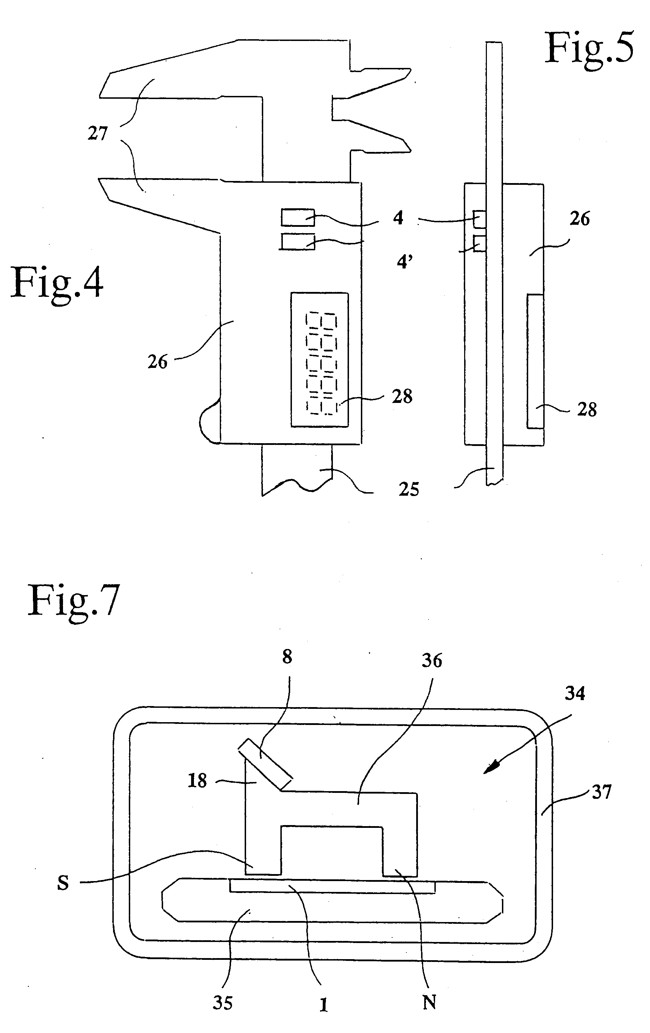

Die Fign. 4 und 5 zeigen die Anwendung von Meßsystemen der vorstehend erläuterten Art bei einem im übrigen handelsüblich aufgebauten Taschenmeßschieber. Letzterer weist einen feststehenden Stab 25 auf, in welchem die Folgen der Stege 1 und 2 ausgebildet sind. Entlang dem Stab 25 ist ein Schlitten 26 verschiebbar, der zwei nebeneinanderliegende, mit den Stegen 1, 2 zusammenwirkende Meßelemente 4 und 4' trägt, die gleich aufgebaut sind. Wird der Schlitten 26 gegenüber dem Stab 25 bewegt, wird mittels der Meßelemente 4 und 4' ein wegproportionales Signal moduliert, wie dies in Fig. 8 anhand der beiden gegeneinander phasenversetzten Ausgangssignale 22 und 22' angedeutet ist. Diese Signale 22 und 22' können in an sich bekannter Weise aufbereitet und ausgewertet werden, um die zu messende, zwischen Schnäbeln 27 von Stab 25 und Schlitten 26 eingeschlossene Länge beispielsweise an einer gleichfalls auf dem Schlitten 26 sitzenden digitalen Anzeigevorrichtung 28 in Zifferform anzuzeigen. Damit wird im Vergleich zu einem bei solchen Meßschiebern bekannten elektronischen Meß-system eine hohe Unempfindlichkeit gegenüber Umwelteinflüssen, wie Ölnebel, Produktionsemulsion, Wasser, Regen und dergleichen erzielt.

Bei den Anordnungen nach den Fign. 1 bis 5 stehen die beiden Polzahngruppen 9 und 10 Teilen der Stegfolge 1, 2 gegenüber, welche in der gleichen Ebene und damit beispielsweise auf der gleichen Seite des Stabes 25 liegen. Fig. 6 zeigt eine demgegenüber abgewandelte Ausführungsform eines Meßelements 30, dessen Flußführungsteile 6 und 7 entgegengesetzten Seiten eines beispielsweise als Rotor 31 eines Winkelmeßgerätes ausgelegten Bauteils mit Folgen von einander abwechselnden Stegen 32 und 33 mit relativ hoher bzw. relativ niedriger magnetischer Leitfähigkeit gegenüberstehen. Dabei wird der Außenumfangsrand des Rotors 31 von dem in diesem Fall feststehend angeordneten Meßelement 30 hufeisenförmig umgriffen. Aufbau und Funktionsweise einer solchen Meßvorrichtung entsprechen im übrigen grundsätzlich derjenigen der zuvor erläuterten Ausführungsform.

Fig. 7 zeigt eine, weiter abgewandelte Ausführungsform eines Meßelements 34. Ähnlich der Ausführungsform nach den Fign. 1 bis 5 stehen Gruppen von Polzähnen 9 und Polzähnen 10 einer Folge von Stegen 1 mit relativ hoher magnetischer Leitfähigkeit und einer Folge von damit abwechselnden Stegen 2 mit relativ niedriger magnetischer Leitfähigkeit gegenüber. Bei den Stegen 1 kann es sich zweckmäßig um Reineisenstege handeln. Diese Stege 1 sind in einem Abstand entsprechend der Breite der in Fig. 7 nicht erkennbaren Stege mit relativ niedriger magnetischer Leitfähigkeit in der den Polzähnen 9, 10 zugewendeten Breitseite eines Stabes 35 eingelegt, der zugleich selbst die Stege von relativ niedriger magnetischer Leitfähigkeit bildet. Im Falle dieser Ausführungsform sind die beiden Gruppen der Polzähne 9 und 10 einstückiger Bestandteil eines monolithischen Permanentmagneten 36, der vorzugsweise als Sinterkörper ausgebildet ist. Die magnetisch aktiven Bauteile der Vorrichtung sind zum Schutz gegen Fremdfeldbeeinflussung von einem magnetisch leitenden Käfig 37 umgeben. Zweckmäßig ist der Käfig 37 an einem den Permanentmagneten 36 gegenüber dem Stab 35 verschiebbar abstützenden Schlitten, z.B. entsprechend dem Schlitten 26 der Fign. 4 und 5, befestigt. Der Sensor 8 kann in der gleichen Weise wie bei den zuvor erläuterten Ausführungsbeispielen ausgebildet und angeordnet sein.

Fig. 8 zeigt in vereinfachter Form ein Beispiel für die beiden periodischen Signale 22 und 22', dies beim Vorbeiwandern des die Meßelemente 4 und 4' tragenden Schlittens 26 (Fign. 4 und 5) an den Stegen 1, 2 von den jeweils zugehörigen Sensoren 8 abgegeben werden. Dabei sind die Meßelemente 4 und 4' derart gegeneinander versetzt, daß die zugehörigen Sensorausgangssignale 22,22' um 90° phasenverschoben sind. Dies erlaubt es, in bekannter Weise die Richtung der Bewegung des bewegbaren Bauteils (Schlitten 26) gegenüber dem feststehenden Bauteil (Stab 25) zu erkennen. In Fig. 8 sind mit U die Signalspannung und mit X der Verschiebeweg des Schlittens bezeichnet.

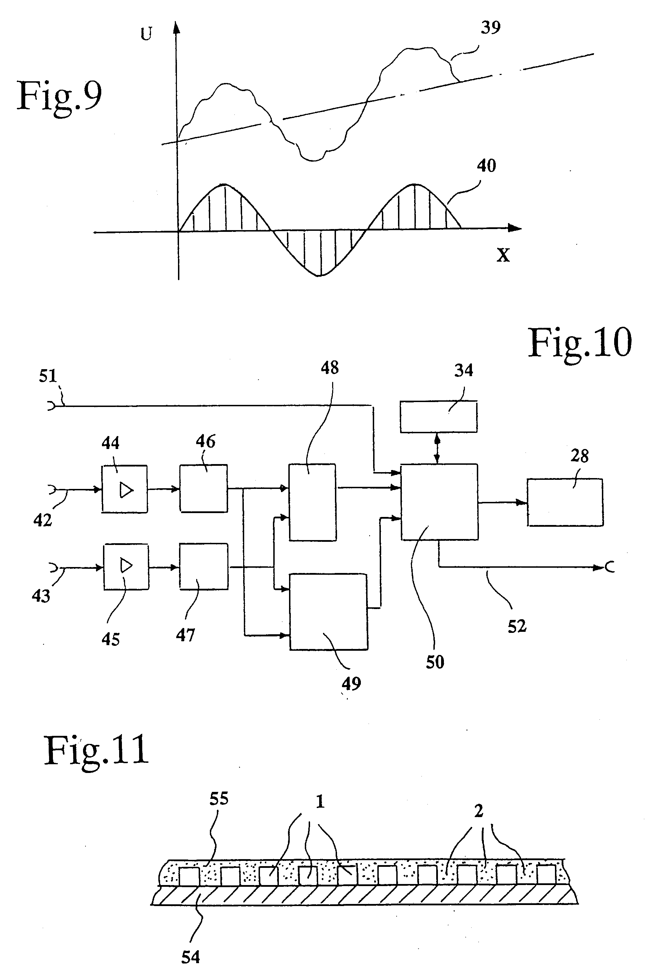

In Fig. 9 ist ein eher realistisches Sensorausgangssignal 39 dargestellt, bei welchem dem eigentlichen Meßsignal Störspannungen höherer Ordnung überlagert sind und bei dem ein Offset, bedingt durch Temperatur- und/oder Verschleißdrift und dergleichen, angedeutet ist. Das Signal 39 kann in an sich bekannter Weise einer Signalanalyse bzw. Filterung unterzogen werden, um die überlagerten Störschwingungen zu beseitigen und den Offset zu kompensieren und auf diese Weise ein bereinigtes periodisches Signal 40 zur Verfügung zu stellen. In dieses kompensierte Signal können Stützstellen gelegt werden. Durch lineare Interpolation der betreffenden Amplitudenwerte läßt sich die Auflösung für den erfaßten Weg erhöhen.

Fig. 10 veranschaulicht in stark vereinfachter Form das Blockschaltbild einer möglichen Ausführung einer Auswerteelektronik für die Sensorausgangssignale. Dabei gehen den Eingängen 42 und 43 von Verstärkern 44 bzw. 45 die Ausgangssignale zweier versetzt angeordneter Meßelemente, beispielsweise der Meßelemente 4 und 4' der Fign. 4 und 5, zu. Jedem der Verstärker 44, 45 ist ein Filter 46 bzw. 47 zum Ausfiltern von Störschwingungen höherer Ordnung nachgeschaltet. Die Ausgänge der Filter 46 und 47 sind einerseits an einen Richtungsdetektor 48 jzum Ermitteln der Bewegungsrichtung des bewegbaren Bauteils sowie andererseits an einen Signalprozessor 49 angeschlossen. Der Signalprozessor 49 ist mit einem Speicher versehen. Die Ausgänge des Richtungsdetektors 48 und des Signalprozessors 49 sind mit Eingängen eines Mikroprozessors 50 verbunden. Einem weiteren Eingang 51 des Mikroprozessors 50 können Signale, z.B. Rückstellsignale, von einer nicht dargestellten Tastatur zugehen. An einem Ausgang des Mikroprozessors 50 ist eine digitale Anzeigevorrichtung 28 (z.B. entsprechend Fig. 4) angeschlossen. Der Mikroprozessor 50 kann zweckmäßig ferner einen seriellen Schnittstellenausgang 52 zur weiteren Verwertung der Meßergebnisse aufweisen.

Fig. 11 zeigt eine zweckmäßige Ausführungsvariante zur Bildung der Stege 1 und 2. Dabei sind auf einen Träger 54 aus magnetisch relativ schlecht leitendem Werkstoff, z.B. Glas, Kunststoff, Stahl oder dergleichen, Stege 1 aus Reineisen oder einem anderen magnetisch gut leitenden Werkstoff in regelmäßigen Abständen aufgebracht. Die Zwischenräume zwischen den Stegen 1 sind zweckmäßig mit Kunstharz 55 ausgefüllt, um so die Stege 2 zu bilden. Die Kunstharzfüllung 55 kann zugleich, wie veranschaulicht, die Stege 1 in Form eines mit den Stegen 2 einstückig verbundenen Schutzüberzuges überdecken. Die Oberseite der Stege 1 kann aber beispielsweise auch mit einer Schutzfolie überzogen werden.

## Patentansprüche

1. Vorrichtung zum Messen von Längen, Winkeln und dergleichen, mit zwei gegeneinander bewegbaren Bauteilen (25, 26, 31, 35), die zusammen einen magnetischen Kreis bilden, der über einen Luftspalt (16) zwischen den gegeneinander bewegbaren Bauteilen geführt ist, wobei das eine (25, 31, 35) der Bauteile mit einer Folge von einander in Richtung der gegenseitigen Bewegung in vorgegebener Teilung abwechselnden Stegen (1, 2, 32, 33) von relativ hoher und relativ niedriger magnetischer Leitfähigkeit versehen ist, während das andere Bauteil (26) mindestens ein Meßelement (4, 4', 30, 34) mit einem aus einem magnetfeldabhängigen Halbleiter-Bauelement bestehenden Magnetfeld-Sensor (8) aufweist, der auf durch gegenseitige Bewegung der beiden Bauteile bedingte Änderungen eines von einer Magnetflußquelle (5, 36) verursachten, den magnetischen Kreis durchsetzenden Magnetflusses anspricht, **dadurch gekennzeichnet,** daß der Sensor (8) außerhalb des über den Luftspalt (16) geführten magnetischen Kreises in dessen Streufeldbereich angeordnet ist.

2. Vorrichtung nach Anspruch 1, dadurch gekennzeichnet, daß in dem Meßelement (4, 4', 30, 34) mehrere in Richtung der gegenseitigen Bewegung der beiden Bauteile (25, 26, 31, 35) nebeneinanderliegende, entsprechend der Stegteilung (Tₛ) geteilte magnetische Teilflüsse (15) zu einem Gesamtfluß (17) zusammengefaßt sind, und daß der mindestens eine Sensor (8) derart angeordnet und ausgebildet ist, daß er ein Ausgangssignal (22, 22', 39) abgibt, das eine Funktion der Summe der magnetischen Teilflüsse (15) ist.

3. Vorrichtung nach einem der vorhergehenden Ansprüche, dadurch gekennzeichnet, daß das Meßelement (4, 4', 30, 34) mit zwei quer zu der Richtung der gegenseitigen Bewegung in Abstand voneinander liegenden Gruppen von Polzähnen (9, 10) entgegengesetzter Polung versehen ist, die mit der Stegfolge (1, 2) zusammenwirken und die an einem von der Stegfolge abliegenden Ende gruppenweise magnetisch leitend untereinander verbunden sind.

4. Vorrichtung nach Anspruch 3, dadurch gekennzeichnet, daß jede der beiden Polzahngruppen von je einem Flußführungsteil (6, 7) gebildet ist, das einen sich in der Richtung der gegenseitigen Bewegung erstreckenden Steg (11, 12) aufweist, welcher die Polzähne (9, 10) des betreffenden Flußführungsteils an ihrem von der Stegfolge (1, 2) abliegenden Ende untereinander verbindet.

5. Vorrichtung nach Anspruch 4, dadurch gekennzeichnet, daß die Flußführungsteile (6, 7) mit ihren Stegen (11, 12) an den beiden Polflächen eines die Magnetflußquelle bildenden Permanentmagneten (5) anliegen.

6. Vorrichtung nach Anspruch 3, dadurch gekennzeichnet, daß die Magnetfeldquelle und die beiden Polzahngruppen (9, 10) von einem monolithischen Permanentmagneten (36) gebildet sind.

7. Vorrichtung nach Anspruch 6, dadurch gekennzeichnet, daß der Permanentmagnet (36) als Sinterkörper ausgebildet ist.

8. Vorrichtung nach einem der Ansprüche 3 bis 7, dadurch gekennzeichnet, daß beiden Polzahngruppen (9, 10) Teile der Stegfolge (1, 2) gegenüberstehen, die auf der gleichen Seite des einen Bauteils (25, 35) liegen.

9. Vorrichtung nach einem der Ansprüche 3 bis 7, dadurch gekennzeichnet, daß beiden Polzahngruppen (9, 10) Teile der Stegfolge (1, 2) gegenüberstehen, die auf entgegengesetzten Seiten des einen Bauteils (31) liegen.

10. Vorrichtung nach Anspruch 9, dadurch gekennzeichnet, daß das eine Bauteil (31) von dem Meßelement (30) an drei Seiten hufeisenförmig umgriffen wird.

11. Vorrichtung nach einem der vorhergehenden Ansprüche, dadurch gekennzeichnet, daß der Sensor in der Richtung der gegenseitigen Bewegung eine Abmessung hat, die größer als 50 % und vorzugsweise größer als 100 % der Teilungen der Polzähne (9, 10) und der Stegfolge (1, 2) ist.

12. Vorrichtung nach einem der Ansprüche 2 bis 11, dadurch gekennzeichnet, daß das Meßelement (4, 4', 30, 34) mindestens einen Streufeldkonzentrator (18) aufweist, der mit dem mindestens einen Sensor zusammenwirkt.

13. Vorrichtung nach Ansprüchen 4, 6 7 und 12, dadurch gekennzeichnet, daß der Streufeldkonzentrator von einem außerhalb des magnetischen Kreises liegenden, sich verjüngenden Ansatz (18) des einen Flußführungsteils (7) bzw. des monolithischen Permanentmagneten (37) gebildet ist.

14. Vorrichtung nach einem der vorhergehenden Ansprüche, dadurch gekennzeichnet, daß das eine Bauteil (25, 35) einen magnetisch nicht oder schlecht leitenden Träger (54) aufweist, der die Stege (2) mit relativ niedriger magnetischer Leitfähigkeit trägt oder bildet und der mit aufgebrachten oder eingelassenen, magnetisch leitenden Stegen (1) versehen ist.

15. Vorrichtung nach einem der Ansprüche 3 bis 14, dadurch gekennzeichnet, daß in der Richtung der gegenseitigen Bewegung die Stege (1) von relativ hoher magnetischer Leitfähigkeit, die Stege (2) von relativ niedriger magnetischer Leitfähigkeit, die Polzähne (9, 10) und die zwischen den Polzähnen befindlichen Pollücken (13, 14) jeweils mindestens näherungsweise die gleiche Abmessung haben.

16. Vorrichtung nach einem der vorhergehenden Ansprüche, gekennzeichnet durch einen magnetisch leitenden Käfig (37), der mindestens die magnetisch aktiven Bereiche der Vorrichtung zum Schutz gegen Fremdfeldbeeinflussung umgibt.

17. Vorrichtung nach einem der vorhergehenden Ansprüche, dadurch gekennzeichnet, daß das andere Bauteil (26) zwei gegeneinander versetzt angeordnete Meßelemente (4, 4') aufweist, deren Ausgangssignale derart miteinander kombiniert und ausgewertet werden, daß Gleichspannungsanteile der Sensorausgangssignale ohne Einfluß auf das Meßergebnis bleiben.

18. Vorrichtung nach einem der vorhergehenden Ansprüche, dadurch gekennzeichnet, daß als Magnetfeld-Sensor (8) eine Feldplatte, eine Hallsonde, ein Hallgenerator oder eine Ferritplatte vorgesehen ist.

## Claims

1. Device for measuring lengths, angles and the like, having two components (25, 26, 31, 35) movable relative to one another and together forming a magnetic circuit, which is guided between the components movable relative to one another via an air gap (16), one (25, 31, 35) of the components being provided with a series of webs (1, 2, 32, 33) of specified spacing in an alternating sequence, in the direction of relative motion, of relatively high and relatively low magnetic conductivity, whilst the other component (26) has at least one measuring element (4, 4', 30,34) with a magnetic field sensor (8) consisting of a magnetic field-dependent semiconductor structural element, which responds to changes due to relative motion of the two components in a magnetic flux originating from a magnetic flux source (5, 36) and passing through the magnetic circuit, characterised in that the sensor (8) is disposed outside the magnetic circuit passing through the air gap (16) in its stray field region.

2. Device according to claim 1, characterised in that a plurality of magnetic subsidiary fluxes (15), which are divided according to the web spacing (Tₛ) and are adjacent to one another in the direction of the relative motion of the two components (25, 26, 31, 35), are combined into a total flux (17), and in that the sensor (8), of which there is at least one, is so arranged and formed that it generates an output signal (22, 22', 39) which is a function of the total of the magnetic subsidiary fluxes (15).

3. Device according to one of the preceding claims, characterised in that the measuring element (4, 4', 30, 34) is provided with two groups of pole teeth (9,10) of opposite polarity spaced apart transverse to the direction of relative motion, said groups cooperating with the series of webs (1, 2) and being connected together in groups at an end remote from the series of webs so as to conduct magnetic energy.

4. Device according to claim 3, characterised in that each of the two groups of pole teeth is formed by a respective flux guiding part (6, 7), comprising a web (11, 12) extending in the direction of relative motion, said web connecting together the pole teeth (9, 10) of the respective flux guiding part at its end remote from the series of webs (1, 2).

5. Device according to claim 4, characterised in that the webs (11, 12) of the flux guiding parts (6, 7) abut the two pole faces of a permanent magnet (5) forming the magnetic flux source.

6. Device according to claim 3, characterised in that the magnetic field source and the two groups of pole teeth (9, 10) are formed by a monolithic permanent magnet (36).

7. Device according to claim 6, characterised in that the permanent magnet (36) is formed as a sintered body.

8. Device according to one of claims 3 to 7, characterised in that both the groups of pole teeth (9,10) are opposite to parts of the series of webs (1, 2) lying on the same side of the one component (25, 35).

9. Device according to one of claims 3 to 7, characterised in that both groups of pole teeth (9,10) are opposite to parts of the series of webs (1, 2) lying on the opposite side of the one component (31).

10. Device according to claim 9, characterised in that the one component (31) is grasped on three sides by the measuring element (30) in the form of a horseshoe.

11. Device according to one of the preceding claims, characterised in that in the direction of relative motion the sensor has a dimension larger than 50% and preferably larger than 100% of the spacings of the pole teeth (9, 10) and the series of webs (1, 2).

12. Device according to one of claims 2 to 11, characterised in that the measuring element (4, 4', 30, 34) has at least one stray field concentrator (18) which cooperates with at least one sensor.

13. Device according to claims 4, 6, 7 and 12, characterised in that the stray field concentrator (18) is formed by a tapering projection (18) of the one flux guiding part (7) or of the monolithic permanent magnet (37), which projection lies outside the magnetic circuit.

14. Device according to one of the preceding claims, characterised in that the one component (25, 35) has a support (54) which is not magnetically conductive or has poor magnetic conductivity, which supports or forms the webs (2) with relatively low magnetic conductivity, and which is provided with magnetic conductive webs (1) placed over it or countersunk into it.

15. Device according to one of claims 3 to 14, characterised in that in the direction of relative motion the webs (1) with a relatively high magnetic conductivity, the webs (2) with a relatively low magnetic conductivity, the pole teeth (9, 10) and the pole gaps (13, 14) between the pole teeth each have at least approximately the same dimension.

16. Device according to one of the preceding claims, characterised by a magnetically conductive cage (37), which surrounds at least the magnetically active regions of the device in order to give protection against interference from external fields.

17. Device according to one of the preceding claims, characterised in that the other component (26) has two staggered measuring elements (4, 4'), whose output signals are combined and evaluated in such a way that DC voltage components of the sensor output signals have no effect on the measuring result.

18. Device according to one of the preceding claims, characterised in that the magnetic field sensor (8) is a field plate, a Hall probe, a Hall generator, or a ferrite plate.

## Revendications

1. Dispositif de mesure de longueurs, d'angles et analogues, comprenant deux composants (25, 26, 31, 35) déplaçables l'un par rapport à l'autre et formant ensemble un circuit magnétique qui passe par un entrefer (16) compris entre les composants mobiles l'un par rapport à l'autre, l'un (25, 31, 35) des composants étant équipé d'une séquence de barreaux (1, 2, 32, 33) alternant suivant un pas prescrit dans la direction du mouvement réciproque et ayant une conductivité magnétique relativement basse et relativement élevée, tandis que l'autre composant (26) comprend au moins un élément de mesure (4, 4', 30, 34) équipé d'un détecteur (8) de champ magnétique qui est constitué d'un composant à semi-conducteur dépendant du champ magnétique et qui répond à des variations, dues au mouvement relatif des deux composants, d'un flux magnétique produit par une source (5, 36) de flux magnétique et traversant le circuit magnétique, caractérisé en ce que le détecteur (8) est disposé à l'extérieur du circuit magnétique passant par l'entrefer (16), à l'intérieur de la zone de son champ de dispersion.

2. Dispositif selon la revendication 1, caractérisé en ce que plusieurs flux magnétiques partiels (15) juxtaposés dans la direction du mouvement réciproque des deux composants (25, 26, 31, 35) et divisés suivant le pas des barreaux (Tₛ) sont réunis dans l'élément de mesure (4, 4', 30, 34) en un flux global (17) et ce qu'au moins un détecteur (8) est disposé et réalisé de manière qu'il émette un signal de sortie (22, 22', 39) qui est une fonction de la somme des flux magnétiques partiels (15).

3. Dispositif selon l'une des revendications précédentes, caractérisé en ce que l'élément de mesure (4, 4', 30, 34) comprend deux groupes, placés à distance l'un de l'autre transversalement à la direction du mouvement réciproque, de dents polaires (9, 10) de polarité opposée qui coopèrent avec la séquence des barreaux (1, 2) et qui sont reliées les unes aux autres par groupes de manière magnétiquement conductrice à une extrémité tournée à l'opposé de la séquence des barreaux.

4. Dispositif selon la revendication 3, caractérisé en ce que chacun des deux groupes de dents polaires est formé d'une pièce (6, 7) faisant passer le flux et comprenant une traverse (11, 12) qui s'étend dans la direction du mouvement réciproque et qui relie entre elles les dents polaires (9, 10) de la pièce correspondante faisant passer le flux à son extrémité située du côté opposé à celui de la séquence des barreaux (1, 2).

5. Dispositif selon la revendication 4, caractérisé en ce que les traverses (11, 12) des pièces (6, 7) faisant passer le flux sont appliquées contre les surfaces des deux pôles d'un aimant permanent (5) formant la source de flux magnétique.

6. Dispositif selon la revendication 3, caractérisé en ce que la source de flux magnétique et les deux groupes de dents polaires (9, 10) sont formés d'un aimant permanent monolithique (36).

7. Dispositif selon la revendication 6, caractérisé en ce que l'aimant permanent (36) est conformé en corps fritté.

8. Dispositif selon l'une des revendications 3 à 7, caractérisé en ce que des parties de la séquence des barreaux (1, 2) qui sont situées sur le même côté de l'un des composants (25, 35) sont en face des groupes de dents polaires (9, 10).

9. Dispositif selon l'une des revendications 3 à 7, caractérisé en ce que des parties de la séquence des barreaux (1, 2) qui sont situées sur des côtés opposés de l'un des composants (31) sont en face des deux groupes de dents polaires (9, 10).

10. Dispositif selon la revendication 9, caractérisé en ce que l'un des composants (31) est entouré sur trois côtés par l'élément de mesure (30) à la manière d'un fer à cheval.

11. Dispositif selon l'une des revendications précédentes, caractérisé en ce que le détecteur a, dans la direction du mouvement réciproque, une cote qui est supérieure à 50% et de préférence supérieure à 100% de celle des pas des dents polaires (9, 10) et de la séquence des barreaux (1, 2).

12. Dispositif selon l'une des revendications 2 à 11, caractérisé en ce que l'élément de mesure (4, 4', 30, 34) comprend au moins un élément (18) de concentration du champ de dispersion qui coopère avec au moins un détecteur.

13. Dispositif selon les revendications 4, 6, 7 et 12, caractérisé en ce que l'élément de concentration du champ de dispersion est formé d'un prolongement (18) de l'une des pièces (7) faisant passer le flux, ou de l'aimant permanent monolithique (37), qui se rétrécit et qui est situé à l'extérieur du circuit magnétique.

14. Dispositif selon l'une des revendications précédentes, caractérisé en ce que l'un des composants (25, 35) comporte un support (54) non conducteur ou mauvais conducteur du magnétisme, qui supporte ou forme les barreaux (2) à relativement faible conductivité magnétique et qui est équipé de barreaux (1) conducteurs du magnétisme qui sont rapportés ou encastrés.

15. Dispositif selon l'une des revendications 3 à 14, caractérisé en ce que les barreaux (1) de conductivité magnétique relativement élevée, les barreaux (2) de conductivité magnétique relativement basse, les dents polaires (9, 10) et les espaces interpolaires (13, 14) se trouvant entre les dents polaires ont au moins approximativement la même dimension dans la direction du mouvement réciproque.

16. Dispositif selon l'une des revendications précédentes, caractérisé par une cage (37) conductrice du magnétisme qui entoure au moins les zones magnétiquement actives du dispositif pour les protéger contre les champs magnétiques parasites.

17. Dispositif selon l'une des revendications précédentes, caractérisé en ce que l'autre composant (26) comprend deux éléments de mesure (4, 4') décalés l'un par rapport à l'autre et dont les signaux de sortie sont combinés et analysés de manière que les composantes de tension continue des signaux de sortie du détecteur demeurent sans influence sur le résultat de la mesure.

18. Dispositif selon l'une des revendications précédentes, caractérisé en ce que le détecteur (8) de champ magnétique est une magnétorésistance, une sonde de Hall, un générateur de Hall ou une plaque de ferrite.
